Europäisches Patentamt

European Patent Office

Office européen des brevets

(11) Veröffentlichungsnummer: **0 185 290**
**B1**

(12) **EUROPÄISCHE PATENTSCHRIFT**

(45) Veröffentlichungstag der Patentschrift:
**31.05.89**

(21) Anmeldenummer: **85115663.8**

(22) Anmeldetag: **09.12.85**

(51) Int. Cl.⁴: **A 61 C 1/08,** A 61 C 1/06

(54) Zahnärztliche Handstückanordnung mit Beleuchtungseinrichtung.

(30) Priorität: **21.12.84 DE 3447743**

(43) Veröffentlichungstag der Anmeldung:
**25.06.86 Patentblatt 86/26**

(45) Bekanntmachung des Hinweises auf die Patenterteilung:
**31.05.89 Patentblatt 89/22**

(84) Benannte Vertragsstaaten:
**AT CH DE FR GB IT LI SE**

(56) Entgegenhaltungen:
**EP-A-0 075 096**
**EP-A-0 183 972**
**FR-A-2 259 582**
**GB-A-2 118 837**
**GB-A-2 118 838**

(73) Patentinhaber: **Siemens Aktiengesellschaft Berlin und München, Wittelsbacherplatz 2, D-8000 München 2 (DE)**

(72) Erfinder: **Fleer, Ernst- Otto, Friedrich- Ebert- Strasse 35, D-6140 Bensheim 3 (DE)**

## Beschreibung

Die Erfindung bezieht sich auf eine zahnärztliche, mit einer Beleuchtungseinrichtung versehene Handstückanordnung, enthaltend einen an einen Versorgungsschlauch anschließbaren Antriebsmotor, an dessen Welle der Triebwellenabschnitt eines ein Kopfgehäuse und eine Griffhülse enthaltenden Handstückteils ankuppelbar ist, enthaltend ferner Drehkupplungsmittel, die ein Verdrehen des Handstückteils gegenüber dem Versorgungsschlauch gewährleisten, einen mittels Leitungen mit elektrischer Energie versorgten Lichterzeuger sowie gegebenenfalls ein oder mehrere an den Lichterzeuger sich anschließende Lichtleitelemente.

In der zahnärztlichen Technik ist es bekannt, sogenannte "Hand- und Winkelstücke" leicht abnehmbar an einem den Antriebsmotor enthaltenden Antriebsteil zu haltern. Die Verbindung ist dabei so gestaltet, daß das Hand- und Winkelstück im aufgesetzten Zustand unter Beibehaltung der Triebwellenverbindung gegenüber dem Antriebsteil um dessen Achse gedreht werden kann. Das An- und Abkuppeln erfolgt mittels einer Schnellkupplung an einem die Antriebswelle des Antriebsteils umgebenden Führungszapfen, dessen Anschlußmaße durch ISO-Norm festgelegt sind (US-3 604 960).

Handstückanordnungen dieser Art sind auch mit sogenannter inkorporierter Sprayführung, also mit einer Kühlmedienführung, innerhalb des Antriebsteils und innerhalb der Hand- und Winkelstücke bekannt, wobei zur Medienübergabe am Führungszapfen durch O-Ringe gegeneinander abgedichtete, radial am Führungszapfen mündende Öffnungen und diesen zugeordnete Ringkanäle im Hand- und Winkelstück vorgesehen sind (US-4 007 529).

Solche, für konventionelle Hand- und Winkelstücke geeignete Handstückanordnungen sind auch mit inkorporierter Lichtführung, d.h. mit Lichtführung innerhalb der Handstückteile, bekannt (DE-3 215 219). Bei einer dieser bekannten Ausführungen ist der Lichterzeuger, eine Glühlampe, an einem am Antriebsteil drehbar gehalterten Aufnahmeteil angeordnet. Das Hand- und Winkelstück enthält hier einen am Kopfgehäuse bis zum motorseitigen Ende sich erstreckenden Lichtleiter, der im gekuppelten Zustand der Lampe korrespondierend gegenübersteht. Zwischen Hand- und Winkelstück und Aufnahmeteil sind mechanische Mitnahmeelemente vorgesehen, die den Lichterzeuger und das korrespondierende Lichtleiterende beim Ankuppeln zur Deckung bringen und das Aufnahmeteil bei Drehung des Handstückes mitdrehen. Dementsprechend sind zur Stromzuführung an die Lampe Schleifringe aufweisende Kontakte zwischen Aufnahmeteil und Antriebsteil vorgesehen.

In der älteren, nicht vorveröffentlichten europäischen Anmeldung entsprechend EP-A-183 972 ist eine Ausführung einer Handstückanordnung beschrieben, bei der der Lichterzeuger in einem am rückwärtigen Ende des Antriebsmotors drehbar angeordneten Aufnahmeteil angeordnet ist. Der Antriebsmotor besteht hier aus einer im wesentlichen nur Stator, Rotor, Lager und gegebenenfalls Bürsten und Bürstenhalter aufnehmenden Motorpatrone mit zylindrischer Mantelfläche, welche zwei zueinander beabstandete Lagerflächen bildet, die ein auf die Motorpatrone axial aufsteckbares und mittels einer Schnellrasteinrichtung axial sicherbares Handstückteil, welches die Griffhülse und das Kopfgehäuse enthält oder an welchem ein Griffhülse mit Kopfgehäuse enthaltendes Handstückteil axial ankuppelbar ist, führen. An dem dem Handstückteil abgewandten Ende der Motorpatrone ist ein Kupplungskörper vorgesehen, der im gekuppelten Zustand einen Anschlußzapfen umgreift, dessen Außendurchmesser kleiner ist als der der Motorpatrone und der die Medien Luft und/oder Wasser von aus der zylindrischen Oberfläche des Zapfens austretenden Öffnungen und elektrische Energie von auf der Zapfenoberfläche angeordneten Schleifringen übernimmt und zu einander benachbart angeordneten und gegenüber der Mantelfläche der Motorpatrone vorzugsweise einseitig vorstehenden Anschlußgliedern führt, die in einer für den Einsatz einer Glühlampe geeigneten Ausnehmung des Kupplungskörpers angeordnet sind.

Aus EP-0 034 237 ist ferner eine Handstückanordnung bekannt, bei der der Lichterzeuger außerhalb der Handstückanordnung, z. B. in einem Geräteunit, angeordnet ist und bei der sowohl die Lichtzuführung zum Handstück als auch die Lichtübertragung innerhalb der Handstückanordnung, also zwischen Antriebsteil und Hand- und Winkelstück, mittels Lichtleiter erfolgt. Bei dieser Anordnung ist das Hand- und Winkelstück nach Ankuppeln mit dem Antriebsteil drehfest mit diesem gekuppelt; die Drehbarkeit erfolgt hier zwischen dem Antriebsteil und dem Anschlußteil der Versorgungsleitung.

Neben diesen konventionellen Handstückanordnungen hat sich seit einigen Jahren auch eine Handstückanordnung durchgesetzt, bei der die Griffhülse normalerweise am Antriebsteil verbleibt und lediglich relativ kurze, das Kopfgehäuse enthaltende Behandlungsköpfe leicht lösbar an das Antriebsteil bzw. an die Griffhülse des Antriebsteils angekuppelt werden. Die Griffhülse selbst wird lediglich zu Sterilisationszwecken zusammen mit einer das Antriebsteil, welches die Medienführung beinhaltet, übergreifenden Hülse vom Antrieb abgenommen. Griffhülse und Behandlungskopf sind gegenüber dem Antriebsteil frei drehbar, nicht jedoch die den Motor übergreifende Hülse, welche zusammen mit der Griffhülse vom Antriegsteil abgezogen werden kann (US-4 251 212). Eine solche Handstückanordnung ist bisher nicht mit einer Beleuchtungseinrichtung bekannt, doch besteht auch hier der Wunsch, solche motorbetriebenen Handstückanordnungen auch mit einer inkorporierten Lichtführung anbieten zu können.

Die aufgezeigten unterschiedlichen Ausführungsarten in der Anordnung des Lichterzeugers und der Ausbildung der Griffhülse führen dazu, daß der Kunde, je nach Bestückung seines Gerätes, mit der einen oder anderen Ausführung von Antrieben zwangsläufig nur die dafür vorgesehene Handstück- bzw. Griffhülsenausführung verwenden kann, d.h. konventionelle "Hand- und Winkelstücke" (mit oder ohne Licht) können nur mit konventionellen Antriebsteilen gekuppelt werden; dabei können Handstücke, deren Drehbarkeit am Führungszapfen vorgesehen ist, und solche, deren Drehbarkeit im rückwärtigen Teil des Antriebsteils vorgesehen ist, jeweils nur an dazu passenden Antriebsteilen angekuppelt werden.

Der im Anspruch 1 angegebenen Erfindung liegt die Aufgabe zugrunde, eine Handstückanordnung der eingangs genannten Gattung dahingehend zu verbessern, daß man, ausgehend von einem Antriebssystem, hinsichtlich der Anordnung des Lichterzeugers und der Lichtführung unterschiedliche Ausführungen von Handstückteilen bzw. Griffhülsen mit relativ einfachen Mitteln ankuppeln kann.

Vorteilhafte Ausgestaltungen und Weiterbildungen der Erfindung sind in den Unteransprüchen enthalten.

Dadurch, daß eine normalerweise nur die motorspezifischen Teile enthaltende und somit hinsichtlich der Lichtführung neutrale Motorpatrone, die einen Elektro- oder einen Luftmotor aufnehmen kann, vorgesehen ist und die Einspeisung der für eine Lichterzeugung notwendigen elektrischen Energie von einem Anschlußzapfen des Versorgungsschlauches aus in einen hülsenförmigen Kupplungskörper erfolgt, wobei die Anschlußglieder für die elektrische Energie in einer Ausnehmung des Kupplungskörpers enden, in welcher Ausnehmung eine Lampenfassung angeordnet ist, die den einen Teil einer elektrischen Steckverbindung bildet, deren anderer Teil ein dazu passender Stecker im Handstückteil ist, ist es möglich, alternativ Handstückteile mit integriertem Lichtleiter oder Handstückteile mit integrierter Zuleitung und Lampe aufzusetzen, ohne hierzu bauliche Veränderungen vornehmen zu müssen. Des weiteren können sehr leicht sowohl konventionelle Hand- und Winkelstücke als auch solche mit einer den Motor übergreifenden Hülse, und zwar entweder wiederum mit integrierten, das Licht weiterführenden Elementen oder auch mit integriertem Lichterzeuger im Hand- und Winkelstück, angeschlossen werden. Im Falle von konventionellen Hand- und Winkelstücken kann dies durch einen relativ einfachen Adapter erzielt werden, der handstückseitig den durch ISO genormten Führungszapfen enthält. Wenn, wie gemäß einer weiteren vorteilhaften Ausgestaltung der Erfindung vorgeschlagen wird, der Adapter selbst stirnseitig so ausgebildet ist, daß er alternativ eine Glühlampe, den einen Teil einer Steckkupplung oder Schleifringkontakte aufnimmt, so können daran Hand- und Winkelstücke mit Lichterzeuger oder mit das Licht weiterführenden Elementen aufgesetzt werden.

Mehrere Ausführungsbeispiele der Erfindung werden nachfolgend anhand der Zeichnung näher erläutert.

Es zeigen:

Figur 1 die erfindungsgemäß Motorpatrone I,
Figur 2 ein Anschlußteil II,
Figur 3 einen Kupplungskörper III,
Figur 4 ein Handstück IV mit motorübergreifender Griffhülse,
Figur 5 einen Adapter V,
Figur 6 ein Hand- und Winkelstück VI,
Figur 7 die Motorpatrone I mit aufgesetztem Kupplungskörper III mit Prinzipdarstellung der Möglichkeiten einer Lichterzeugung bzw. -führung,
Figur 8 die in Figur 7 gezeigte Motorpatrone mit im Kupplungskörper eingesetzter Lampe in Vorderansicht,
Figur 9 der in Figur 5 gezeigte Adapter V im Längsschnitt mit Prinzipdarstellung der Möglichkeiten einer Lichterzeugung bzw. -führung,
Figur 10 die Motorpatrone I mit Kupplungskörper III und Adapter V im Längsschnitt,
Figur 11 einen Ausschnitt vom Handstückteil IV im Längsschnitt,
Figur 12 die schlauchseitige Ansicht des in Figur 11 gezeigten Handstückteils,
Figuren 13 und 14 Ausschnitte von den Handstückteilen V und VI im Längsschnitt,
Figur 15 das Handstückteil nach Figur 14 in Frontansicht,
Figuren 16 und 17 Ausschnitte von den Handstückteilen V und VI in einer anderen Ausführung im Längsschnitt,
Figur 18 das Handstückteil nach Figur 17 in Frontansicht.

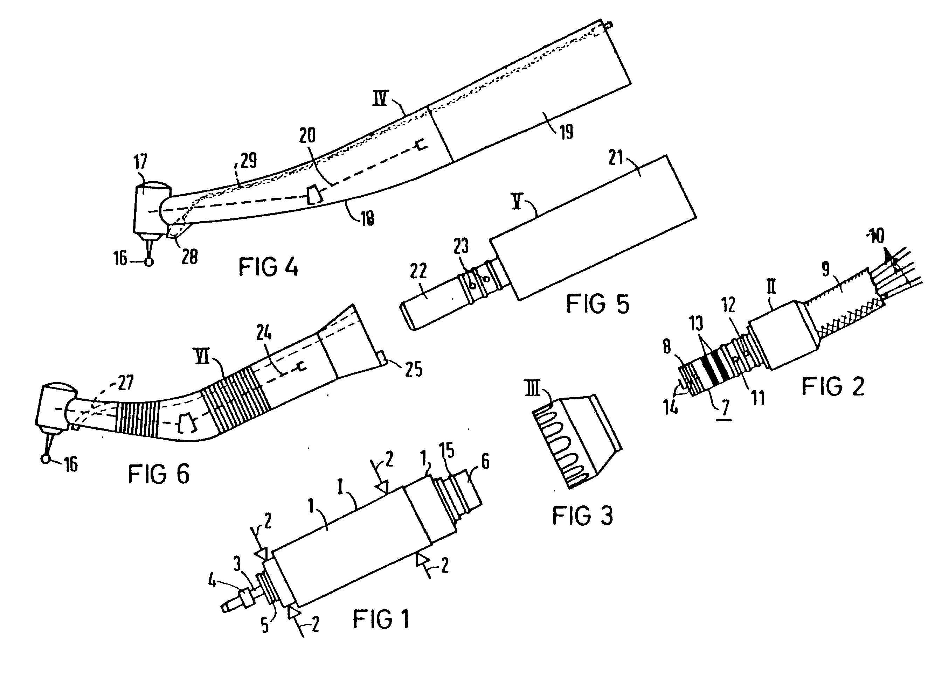

Die Figur 1 zeigt das Grundelement der erfindungsgemäßen Handstückanordnung, die Motorpatrone. Die Motorpatrone, in der Darstellung mit I bezeichnet, weist im wesentlichen zylindrische Mantelflächen 1 auf, welche an den mit den Pfeilen 2 versehenen Stellen zwei zueinander beabstandete Gleitlagerflächen für die auf die Motorpatrone aufsetzbaren Handstückteile bilden. Die Motorpatrone nimmt im wesentlichen nur die motorspezifischen Teile auf, bei einem Elektromotor also Rotor, Stator, Lager, Bürsten und Bürstenhalter. Entsprechendes gilt für einen Luftmotor. Das an der einen Stirnseite der Patrone vorstehende Ende der Motorwelle 3 enthält einen Mitnehmer 4, mit dem in bekannter Weise mit dem Aufstecken der später noch näher erläuterten Handstückteile die Motorwelle an den korrespondierenden Triebwellenabschnitt des Handstückteils angekuppelt wird. Mit 5 ist eine an einem weiteren Absatz der Motorpatrone angeordnete Ringnut bezeichnet, die Teil einer Schnellrasteinrichtung ist, mittels der die aufzusetzenden Handstückteile unter Beibehaltung ihrer Drehbarkeit gegenüber der Antriebspatrone axial gerastet werden können.

Die andere Stirnseite der Antriebspatrone bildet einen hülsenförmigen Ansatz 6, dessen Außendurchmesser im Vergleich zu dem der zylindrischen Mantelflächen 1, welche die beiden Gleitlagerungen bilden, wesentlich kleiner ist.

In die stirnseitige Öffnung des Ansatzes 6 ist der Zapfen 7 eines in Figur 2 gezeigten, mit II bezeichneten Anschlußteiles teilweise einführbar und mittels Schraubverbindung 8 fest (unverdrehbar) mit der Motorpatrone verbindbar. Am Zapfen 7 des Anschlußteils II enden die in einem Versorgungsschlauch 9 herangeführten, mit 10 bezeichneten Zuleitungen für einerseits elektrische Energie und andererseits Luft und Wasser. Luft und Wasser münden in bekannter Weise an radialen, am Zapfenumfang angeordneten, durch nicht näher bezeichnete O-Ringe gegeneinander abgedichteten Öffnungen 11, 12. Die elektrischen Leitungen enden am Zapfen einerseits an einem Schleifringpaar 13 und andererseits an einem stirnseitig des Zapfens angeordneten Kontaktpaar 14. Letzteres besteht aus einer zentrisch im Zapfen 7 angeordneten Kontaktbuchse und einer konzentrisch dazu angeordneten Kontaktfeder. Das Schleifringpaar 13 dient zur Zufuhr elektrischer Energie an eine später noch näher erläuterte Beleuchtungseinrichtung, das Kontaktpaar 14 zur Zufuhr der notwendigen Spannung an den Motor (entfällt bei einem Luftmotor).

Die Figur 3 zeigt einen mit III bezeichneten Kupplungskörper, der, bevor die in Figur 2 gezeigte Anschlußarmatur II mit der Motorpatrone verschraubt wird, auf den Ansatz 6 axial aufgesteckt und mittels eines O-Ringes 15 (Figur 1) axial fixiert wird.

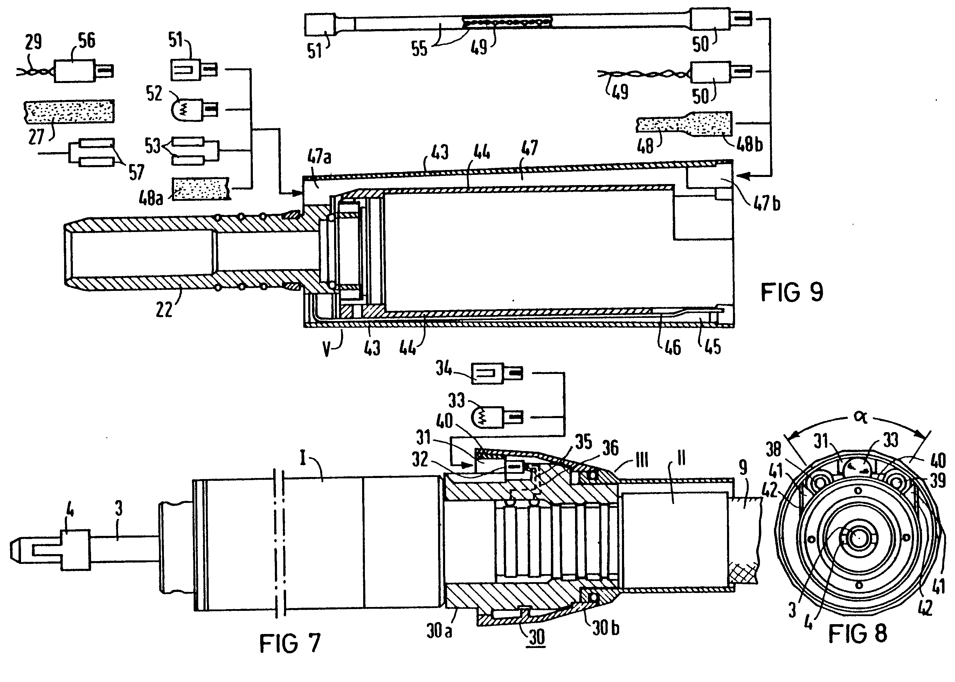

Im montierten Zustand, also nach Aufsetzen des Kupplungskörpers III auf die Motorpatrone I und anschließendem Verschrauben der Anschlußarmatur II mit der Motorpatrone I (siehe Figur 7), kann alternativ entweder das in Figur 4 gezeigte Handstück IV oder ein in Figur 5 gezeigter Adapter V axial aufgesetzt und mittels der bereits erwähnten Schnellrasteinrichtung 5 gegen axiales Abgleiten gesichert gerastet werden. Wie später noch näher erläutert, sind diese Teile (IV oder V) im aufgesetzten Zustand drehfest mit dem Kupplungskörper III verbunden, können also gemeinsam mit diesem gegenüber dem Versorgungsschlauch verdreht werden.

Wenn in der vorliegenden Ausführungsform der Anschlußzapfen 7 des Versorgungsschlauches drehfest mit der Motorpatrone I verbunden ist und der Kupplungskörper III gegenüber diesen beiden Teilen drehbar angeordnet ist, so ist alternativ auch eine Ausführungsform denkbar, bei der der Kupplungskörper III Bestandteil der Motorpatrone I ist, also beispielsweise drehfest an dieser befestigt ist, und der Anschlußzapfen 7 drehbar und gegen axiales Abgleiten gesichert an der Motorpatrone I, z. B. im Ansatz 6, gehalten ist. Die im folgenden näher erläuterten Maßnahmen zur Lichterzeugung bzw. Lichtführung gelten demnach auch für diese erwähnte Alternativlösung.

Bei dem Handstück nach Figur 4 handelt es sich um ein Handstückteil, bei dem ein das anzutreibende Werkzeug 16 aufnehmendes Kopfgehäuse 17 zusammen mit einer sich zum motorseitigen Ende erstreckenden Griffhülse 18 und eine die Motorpatrone übergreifende, die Gegenlagerflächen zu 2 aufnehmende weitere Hülse 19 eine Einheit bilden. Im aufgesteckten Zustand befindet sich das motorseitige Ende der allgemein mit 20 bezeichneten Triebwellenabschnitte des Randstückteils IV in Eingriff mit der Motorwelle 3.

Der Adapter V gemäß Figur 5 enthält einen hülsenförmigen Abschnitt 21 und einen Führungszapfen 22, an den in bekannter Weise an radial mündenden Öffnungen 23 die Medien Luft und Wasser, durch nicht näher bezeichnete O-Ringe gegeneinander abgedichtet, zur weiteren Übernahme in einem auf den Zapfen 22 aufsteckbaren Hand- und Winkelstück, wie in Figur 6 gezeigt, angeboten werden. Der Zapfen 22 st so bemessen, daß auf ihm handelsübliche, nach ISO genormte Hand- und Winkelstücke, wie in Figur 6 vereinfacht dargestellt, aufgesteckt werden können. Im komplett montierten Zustand, wenn also die Teile VI, V und I miteinander verbunden sind, sind auch die Triebwellenabschnitte 24 mit der Motorwelle 3 verbunden. Mit 25 ist noch eine stirnseitig des Handstückes VI vorstehende Nase bezeichnet, mit der beim Aufsetzen des Handstückes auf den Adapter V ein Schaltvorgang ausgelöst werden kann.

Die beiden Handstückteile IV (gemäß Figur 4) und VI (gemäß Figur 6) können entweder mit einem bis zum Kopfgehäuse sich erstreckenden Lichtleiter versehen sein oder an geeigneter Stelle, zweckmäßigerweise in Nähe des Kopfgehäuses, eine Kleinstglühlampe aufweisen; in letzterem Falle ist von der Lampe aus bis zum anderen Ende des Handstückteils ein Zuleitungskabel verlegt.

Im vorliegenden Ausführungsbeispiel wird davon ausgegangen, daß das in Figur 6 gezeigte konventionelle Hand- und Winkelstück mit einem Lichtleiter ausgestattet ist, der in der Figur vereinfacht dargestellt und mit der Position 27 bezeichnet ist, und das Handstückteil gemäß Figur 4 eine im Bereich des Kopfgehäuses angeordnete Glühlampe 28 enthält, die über ein Zuleitungskabel 29 mit der notwendigen Spannung versorgt wird. Die Verlegung des Lichtleiters 27 bzw. des Zuleitungskabels 29 innerhalb der Handstückteile IV und VI stellt an sich kein Problem dar; sie braucht deshalb im einzelnen nicht näher erläutert zu werden.

Nachdem die Führung der Kühlmedien (Luft und Wasser) für die vorliegende Erfindung keine maßgebende Bedeutung hat, wird in den nachfolgenden Figuren, auch der besseren Übersichtlichkeit wegen, der Verlauf der Kühlmittel im einzelnen nicht aufgezeigt, vielmehr die Maßnahmen zur Lichterzeugung und Weiterleitung innerhalb der Handstückanordnung.

Anhand der Figuren 7 und 9 werden zunächst die verschiedenen Möglichkeiten, die sich durch die erfindungsgemäße Handstückanordnung ergeben, aufgezeigt.

Wie bereits erwähnt, ist - entsprechend einer bevorzugten Ausführungsform - die Antriebspatrone I mit der Anschlußarmatur II drehfest verbunden und der in Figur 3 gezeigte Kupplungskörper III um den Zapfen 7 der Anschlußarmatur II drehbar angeordnet.

Der Kupplungskörper III besteht im wesentlichen aus einer zweiteiligen Hülse 30, einer Innenhülse 30a und einer Außenhülse 30b. Innenhülse und Außenhülse bilden eine Ausnehmung 31, in die eine Fassung 32 eingesetzt ist, in die alternativ eine Kleinstglühlampe 33 oder eine Steckbuchse 34 eingesetzt werden kann. Die Fassung 32 weist gegeneinander isolierte elektrische Kontakte auf, die zu entsprechend ausgebildeten Gegenkontakten der Lampe 33 bzw. der Steckbuchse 34 passen und mit Anschlußleitungen 35, 36 verbunden sind, deren Enden auf den Schleifringen 13 des Zapfens 7 (Figur 2) federnd aufliegen. Die Ausnehmung 31 zur alternativen Aufnahme der Glühlampe 33 oder der Steckbuchse 34 ist so angeordnet, daß im montierten Zustand die Glühlampe 33 bzw. die Öffnung der Steckbuchse 34 über der Mantelfläche der Motorpatrone I vorsteht, so daß beim Aufstecken der Handstückteile IV/V die das Licht bzw. die Spanung weiterführenden Elemente der Lampe bzw. der Steckbuchse sich korrespondierend gegenüberstehen bzw. ineinandergreifen.

Aus Figur 8, die die Motorpatrone I mit aufgesetztem Kupplungskörper und eingesetzter Lampe 33 in Frontansicht zeigt, ist erkennbar, daß beidseitig der Lampe 33 Anschlußbuchsen 38, 39 für Wasser und Luft angeordnet sind. Die Anschlußbuchsen für Wasser und Luft und die Lampenfassung 32 sind vorteilhafterweise in einem einsetzbaren Halterungsteil 40 auf einen relativ eng begrenzten Winkelbereich (α) von ca. 60° bis 70° des Umfanges zusammengefaßt und enden stirnseitig so, daß an sie entsprechend ausgebildete Gegenglieder der auf die Motorpatrone aufsteckbaren Handstückteile angekuppelt werden können. Das in der Hülse angeordnete Halterungsteil 40 enthält axial vorstehende Positionierungs- und Mitnahmeteile 41 mit zueinander parallelen Flächen 42, die mit entsprechend an den anzukuppelnden Handstückteilen (IV/V) angeordneten Gegenflächen 58 von Gegengliedern 59 beim Aufsetzen dieser Randstückteile auf die Motorpatrone in Eingriff kommen und Handstückteil und Kupplungskörper für eine gemeinsame Drehung miteinander verbinden.

Der auf die Motorpatrone I aufsetzbare Adapter V (Figur 9) besteht aus einer die äußere Umhüllung bildenden dünnen Außenhülse 43 und einem Einsatzteil 44, dessen Innenkontur der Außenkontur der Motorpatrone I entspricht und insbesondere die zur Verdrehung notwendigen, den Lagerstellen 2 entsprechende Führungsflächen aufweist. Das Einsatzteil 44 enthält an seiner Peripherie Ausnehmungen 45, die mit der Außenhülse 43 einen ringförmigen Raum bilden, in dem einerseits die nicht dargestellten Rohrleitungen zur Durchführung von Luft und Wasser und andererseits eine Schaltstange 46 geführt bzw. gehaltert sind. Die in den ringförmigen Raum eingelegten Teile sind so angeordnet, daß der dazwischenliegende Raum zur Durchleitung von Kühlluft zur Kühlung des Motors verwendet werden kann. Die Kühlluft durchströmt zunächst den Kupplungskörper III, wobei die Luftführung so ausgeführt ist, daß die Lampe 33 von der vorbeiströmenden Luft gekühlt wird. Im Adapter V ist ein weiterer Führungskanal 47 vorgesehen, der zur alternativen Halterung bzw. Führung eines Lichtleiters 48 oder einer mit Steck- oder Schleifkontakten 50, 51, 53 versehenen elektrischen Leitung 49 dient. Zumindest die Enden 47a, 47b des Führungskanals sind so ausgebildet, daß, bezogen auf das Ende 47b, alternativ das eine Ende 48b des Lichtleiters 48 oder ein zur Steckbuchse 34 passender Stecker 50 und, bezogen auf das gegenüberliegende Ende, alternativ das Ende 48a des Lichtleiters 48, eine der Steckbuchse 34 entsprechende Buchse 51, eine der Lampe 33 entsprechende Lampe 52 oder zwei konzentrisch angeordnete Schleifringkontakte 53 gehaltert werden können.

Besonders vorteilhaft ist es, wenn man den Lichtleiter 48 bzw. die Leitung 49 mit den je nach Anwendungsfall vorzusehenden Anschlüssen (50, 51; 50, 52; 50, 53) in einem stab- bzw. fohrförmigen Einsatzteil 55 anordnet. Dieses Einsatzteil, das starr oder auch biegsam ausgebildet sein kann, braucht dann nur noch in den vorgesehenen Führungskanal 47 entweder axial oder, z. B. vor Aufschieben der Außenhülse 43, radial eingelegt zu werden.

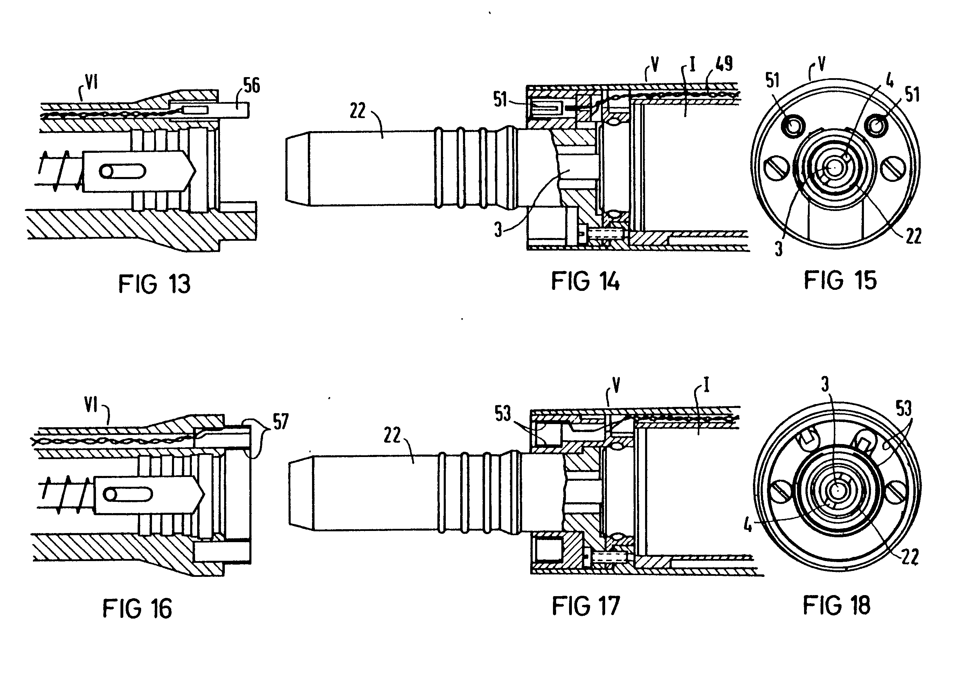

Eine Weiterführung des Lichts bzw. der Spanung in dem auf den Adapter V aufsteckbaren Hand- und Winkelstück VI erfolgt, je nachdem, ob das Handstück mit einer Lampe oder einem Lichtleiter ausgestattet ist, in analoger Weise, also entweder mittels eines zur Steckbuchse 51 passenden Steckers 56, an dem eine zur Lampe führende Leitung (entsprechend Pos. 28 und 29 in Figur 4) angeschlossen ist, oder mittels eines der Lampe 52 korrespondierend gegenüberliegenden Lichtleiters 27 (Figur 6) oder mit Hilfe von zu den Schleifkontakten 53 passenden Gegenkontakten 57. Näheres ist aus den Figuren 16 bis 18 ersichtlich.

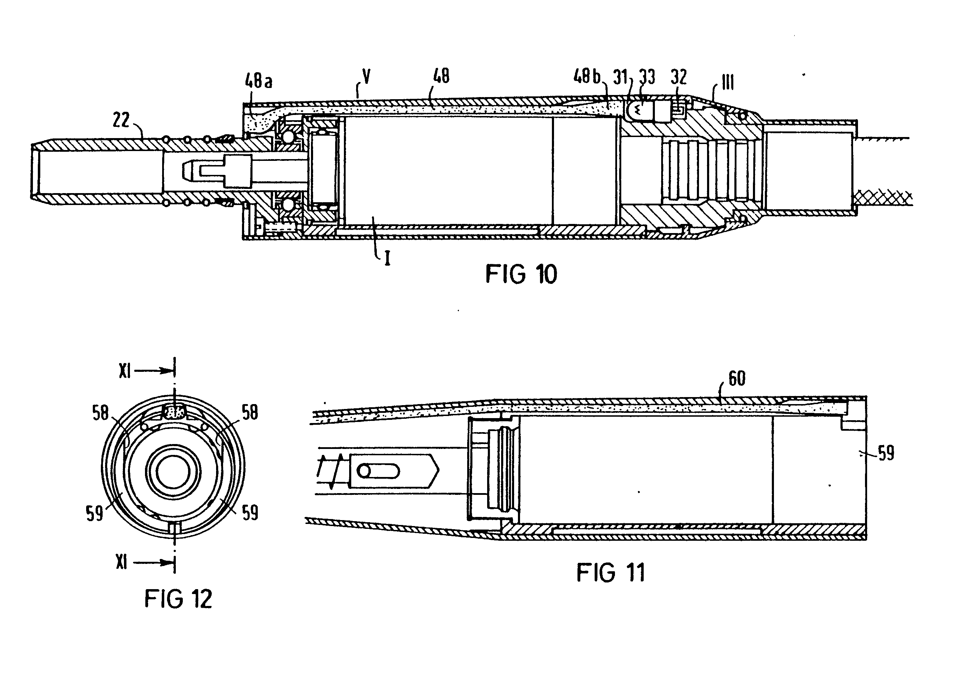

Bei dem in Figur 10 dargestellten Ausführungsbeispiel ist in der Ausnehmung 31 bzw. in der dort angeordneten Fassung 32 eine Glühlampe (Pos. 33) und im Adapter V ein Lichtleiter (Pos. 48) angeordnet. Auf diesen Adapter V kann nun das in Figur 6 gezeigte, ebenfalls mit einem Lichtleiter versehene Hand- und Winkelstück aufgesetzt werden, wobei im aufgesetzten Zustand das Ende des Lichtleiters 27 dem Ende 48a des Lichtleiters 48 korrespondierend gegenübersteht. Bei dieser Version sind Mitnahmeglieder, z. B. in Form der in Figur 6 mit 25 bezeichneten Rastnase, vorgesehen, die für eine drehfeste Verbindung von Hand- und Winkelstück VI und Adapter V sorgen.

Wird der Adapter V von der Motorpatrone I abgezogen, so kann alternativ ein Randstückteil IV der in Figur 4 gezeigten Gattung aufgesetzt werden, das, wie in Figur 11 im Ausschnitt gezeigt, mit einem bis zum Kopfgehäuse sich erstreckenden und dort an einer für die Ausleuchtung des Präparationsbereiches geeigneten Stelle austretenden Lichtleiters 60 versehen ist. Soll anstelle eines mit einem Lichtleiter versehenen Handstückteils IV ein solches mit im Bereich des Kopfgehäuses angeordneter Lampe, wie in Figur 4 gezeigt, aufgesetzt werden, welches stirnseitig einen Stecker entsprechend der Position 50 oder 56 aufweist, so ist anstelle der Lampe 33 in die Lampenfassung 32 des Kupplungskörpers III eine Steckbuchse 34 einzusetzen. Ist es aufgrund der Gestaltung der Lampe, insbesondere der Lampenkontakte, möglich, die Lampenfassung 32 so auszubilden, daß in sie der Stecker 50 direkt eingesteckt werden kann, so kann auf die Steckbuchse 34 als Anpassungselement verzichtet werden.

Aus Figur 12, die das dem Kupplungskörper III zugewandte Ende des Handstückteils IV in der Ansicht zeigt, sind die zu den Positionier- und Mitnahmegliedern 41 gehörenden Gegenglieder mit zugehörigen Flächen 58 ersichtlich.

Die Figuren 13 bis 15 einerseits und 16 bis 18 andererseits zeigen Ausschnitte von zwei Ausführungsformen eines Adapters V und dem zugehörigen Hand- und Winkelstück VI. In der einen Ausführungsform (gemäß den Figuren 13 bis 15) sind an der Stirnseite von Handstück und Adapter zwei Steckverbindungen 56, 51 vorgesehen; in der anderen Ausführungsform (gemäß den Figuren 16 bis 18) sind zwei konzentrisch zueinander angeordnete Schleifringkontakte 53 mit entsprechenden Gegenkontakten 57 vorgesehen. Anstelle der stirnseitig angeordnete zwei konzentrischen Schleifringkontakte ist es auch denkbar, stirnseitig nur einen Schleifringkontakt vorzusehen und den anderen beispielsweise am Umfang des Kupplungszapfens 22 vorzusehen.

Anstelle der im Ausführungsbeispiel gezeigten Schleifringkontakte 53 können vorteilhafterweise zwei im gekuppelten Zustand auf den Kontaktringen 57 radial aufliegende Kontaktzungen vorgesehen sein, die gegeneinander isoliert in einem Einsatzteil angeordnet sind, welches in die Steckbuchse 51 oder an deren Stelle in die dafür vorgesehene Ausnehmung am Ende 47a des Führungskanals 47 eingesetzt wird. Bei einer solchen Ausbildung der Kontakte 53 ist unter Beibehaltung der konstruktiven Gestaltung eine noch universellere Anschlußmöglichkeit gegeben.

**Patentansprüche**

1. Zahnärztliche Handstückanordnung, enthaltend einen an einem Luft- und/oder Wasser- sowie elektrische Leitungen (10) führenden Versorgungsschlauch (9) anschließbaren Antriebsmotor und ein ein Kopfgehäuse (17) und eine Griffhülse (18) aufweisendes Handstückteil (IV, VI), welches an den Antriebsmotor ankuppelbar ist, und dessen Triebwellenabschnitt (20/24) im gekuppelten Zustand mit der Welle (3) des Antriebsmotors verbunden ist, enthaltend ferner Drehkupplungsmittel, die ein Verdrehen des Handstückteils gegenüber dem Versorgungsschlauch (9) gewährleisten, einen mittels Leitungen mit elektrischer Energie versorgten Lichterzeuger sowie gegebenenfalls ein oder mehrere an den Lichterzeuger sich anschließende Lichtleitelemente, dadurch gekennzeichnet,

- daß der Antriebsmotor aus einer im wesentlichen nur Stator, Rotor, Lager und gegebenenfalls Bürsten und Bürstenhalter aufnehmenden Motorpatrone (I) mit zylindrischer Mantelfläche besteht, welche zwei zueinander beabstandete Lagerflächen (2) bildet, die ein auf die Motorpatrone (I) axial aufsteckbares und mittels einer Schnellrasteinrichtung (5) axial sicherbares Handstückteil (IV, V), welches die Griffhülse (18) und das Kopfgehäuse (17) enthält oder an welchem ein Griffhülse mit Kopfgehäuse enthaltendes Handstückteil (VI) axial ankuppelbar ist, führen,

- daß an dem dem Handstückteil (IV, V) abgewandten Ende der Motorpatrone (I) ein hülsenförmiger Kupplungskörper (III) vorgesehen ist, dessen Innendurchmesser kleiner ist als der Außendurchmesser der Motorpatrone (I) und der im gekuppelten Zustand einen Anschlußzapfen (7) des Versorgungsschlauches (9) umgreift, der die Medien Luft und/oder Wasser von aus der zylindrischen Oberfläche des Zapfens (7) austretenden Öffnungen (11, 12) und elektrische Energie von auf der Zapfenoberfläche angeordneten Schleifringen (13) übernimmt und zu einander benachbart angeordneten und gegenüber der Mantelfläche (1) der Motorpatrone vorzugsweise einseitig vorstehenden Anschlußgliedern (32, 38, 39) im Kupplungskörper (III) führt, und

- daß die Anschlußglieder (32) für elektrische Energie in einer Ausnehmung (31) des Kupplungskörpers (III) enden, in welcher Ausnehmung (31) eine Lampenfassung angeordnet ist, die den einen Teil (34) einer elektrischen Steckverbindung (34, 50) bildet, deren anderer Teil ein dazu passender Stecker (50) im Handstückteil (V, IV) ist.

2. Handstückanordnung nach Anspruch 1, dadurch gekennzeichnet, daß der Kupplungskörper (III) drehfest mit der Antriebspatrone (1) verbunden ist und der Anschlußzapfen (7) des Versorgungsschlauches (9) mittels einer ein Verdrehen der Motorpatrone (1) gegenüber dem Versorgungsschlauch (9) gewährleistenden Drehkupplung mit dem Kupplungskörper (III) verbunden ist.

3. Handstückanordnung nach Anspruch 1, dadurch gekennzeichnet, daß die Motorpatrone (I) an ihrem dem Versorgungsschlauch (9) zugewandten Ende mit Anschlußmitteln (8) für eine verdrehfeste Verbindung mit dem Versorgungsschlauch (9) versehen ist und daß der Kupplungskörper (III) drehfest auf dem Anschlußzapfen (7) des Versorgungsschlauches (9) gehaltert ist.

4. Handstückanordnung nach Anspruch 3, dadurch gkennzeichnet, daß die Motorpatrone (I) einen im Durchmesser dem des Anschlußzapfens (7) angepaßten rohrförmigen Ansatz (6) enthält, auf den der Kupplungskörper (III), den Anschlußzapfen (7) des Versorgungsschlauches (9) übergreifend, drehbar aufgesetzt ist.

5. Handstückanordnung nach einem der Ansprüche 1 bis 4, dadurch gekennzeichnet, daß der Kupplungskörper (III) ein die Anschlußglieder (32, 38, 39) aufnehmendes Halterungsteil (40) enthält oder bildet, welches dem aufzusetzenden Handstückteil (IV, V) zugewandt vorzugsweise zueinander parallel verlaufende Positionier- und Mitnahmeflächen (42) die zu entsprechend ausgebildeten Gegenflächen (58) im aufzusetzenden Handstückteil (IV, V) passen, enthält.

6. Handstückanordnung nach Anspruch 1, dadurch gekennzeichnet, daß auf die Motorpatrone (I) ein Handstückteil (V, IV) aufsetzbar ist, welches einen im wesentlichen achsparallel verlaufenden Führungskanal (47) für den alternativen Einsatz eines Lichtleiters (48) oder einer an ihren Enden mit Steckkontakten (50, 51) versehenen elektrischen Leitung (49) aufweist, wobei der Führungskanal (47) an dem dem Versorgungsschlauch (9) zugewandten Ende in einer Ausnehmug (47b) endet, in der alternativ das eine Ende (48b) des Lichtleiters (48) oder ein elektrischer Stecker (50) gefaßt werden kann und am gegenüberliegenden Ende in einer Ausnehmung (47a) endet, in der alternativ das andere Ende (48a) des Lichtleiters (48), eine Lampe (52), der eine Teil (51) einer elektrischen Steckverbindung (51, 56) oder der eine Teil (53) einer Schleifringkontaktanordnung (53, 57) gefaßt werden können.

7. Handstückanordnung nach Anspruch 6 dadurch gekennzeichnet, daß die Übertragungselemente (48, 49 bis 51, 52, 53) in einem stabförmigen Einsatzteil (55) gefaßt sind, welches auswechselbar im Handstückteil (V, IV) gehaltert ist.

8. Handstückanordnung nach Anspruch 7, dadurch gekennzeichnet, daß das Einsatzteil (55) in einer von einer Außenhülse (43) verkleideten Längsnut des Handstückteils (V) eingelegt ist.

9. Handstückanordnung nach Anspruchs 6, dadurch gekennzeichnet, daß im Handstückteil (IV, V) und/oder im Kupplungskörper (III) eine ringförmige Ausnehmung vorgesehen ist, in der ein die alternativ vorzusehenden Übertragungselemente (32, 33, 50 bis 53) aufnehmendes, ringförmiges Einsatzteil auswechselbar gehaltert ist.

10. Handstückanordnung nach Anspruch 6, dadurch gekennzeichnet, daß das auf die Motorpatrone (I) aufsetzbare Handstückteil (V) eine die Motorpatrone übergreifende Hülse (21) mit einem an der dem Versorgungsschlauch (9) abgewandten Seite angeordneten, die Antriebswelle (3) des Motors umgebenden Führungszapfen (22) enthält, auf den in bekannter Weise ein Hand- und Winkelstück (VI) axial aufsteckbar und im aufgesteckten Zustand drehbar gehalten ist, wobei im aufgesteckten Zustand der oder die Triebwellenabschnitte (24) des Hand- und Winkelstückes mit der Motorwelle (3) in Eingriff stehen, daß die Hülse (21) an ihrer dem Versorgungsschlauch (9) zugewandten Stirnseite Flächen (58) aufweist, die mit am Kupplungskörper (III) befindlichen Positionierflächen (42) beim Aufstecken der Hülse (21) in Eingriff kommen und daß mindestens ein Licht oder Strom führendes Element (48 bis 53) vorgesehen ist, welches in der Hülse (21) im wesentlichen achsparallel geführt ist und stirnseitig der Hülse (21) endet.

11. Handstückanordnung nach einem der Ansprüche 1 bis 9, dadurch gekennzeichnet, daß das auf die Motorpatrone (I) aufsetzbare Handstückteil (IV) eine die Motorpatrone übergreifende Hülse (19) mit sich daran anschließender Griffhülse (18) und daran angeordnetem, das Kopfgehäuse (17) enthaltendem Kopfteil enthält, deren Triebwellenabschnitte (20) im aufgesteckten Zustand mit der Motorwelle (3) in Eingriff stehen, daß die Hülse (19) an ihrer dem Versorgungsschlauch (9) zugewandten Stirnseite Flächen (58) aufweist, die mit am Kupplungskörper (III) befindlichen Positionierflächen (42) beim Aufstecken der Hülse (19) in Eingriff kommen und daß mindestens ein Licht oder Strom führendes Element (60) in dem Handstückteil (IV) angeordnet ist.

12. Handstückanordnung nach einem der Ansprüche 1 bis 11, dadurch gekennzeichnet, daß an der Stirnseite des auf die Motorpatrone (I) aufsetzbaren Handstückteils (V) zwei Steckkontakte (Figur 15) angeordnet sind, zu denen Gegenkontakte am axial anzukuppelnden weiteren, einen Lichterzeuger enthaltenden Handstückteil (VI) passen.

13. Handstückanordnung nach einem der Ansprüche 1 bis 11, dadurch gekennzeichnet, daß an der Stirnseite des auf die Motorpatrone (I) aufsetzbaren Handstückteils (V) zwei Schleifkontakte (Figur 18) angeordnet sind, zu denen entsprechende Gegenkontakte im axial anzukuppelnden weiteren, einen Lichterzeuger enthaltenden Handstückteil (VI) passen.

14. Handstückanordnung nach Aspruch 13, dadurh gekennzeichnet daß als Schleifkontakte zwei federnde, im gekuppelten Zustand der Handstückteile (V, VI) auf konzentrisch zueinander angeordneten Schleifringen (57) des anzukuppelnden Handstückteils (VI) anliegende Kontaktzungen vorgesehen sind, die in einem Einsatzteil angeordnet sind, welches in eine am strinseitigen Ende angeordnete Steckbuchse (51) oder an deren Stelle in eine dafür vorgesehene Ausnehmung (47a) einsetzbar ist.

## Claims

1. A dental hand piece arrangement comprising a driving motor connectable to a supply hose (9) carrying air and/or water and electric lines (10) and a hand piece part (IV, VI) having a head housing (17) and a handle sleeve (18) which can be coupled to the driving motor and whose drive shaft section (20/24), when coupled, is connected to the shaft (3) of the driving motor, further comprising joint coupling means which ensure that the hand piece part can be rotated relative to the supply hose (9), a light source supplied with electrical energy by means of electric leads, and if necessary one or more light conducting elements connected to the light source,
characterised in that
- the driving motor comprises a motor cartridge (I) accommodating substantially only stator, rotor, bearing and possibly brushes and brush holders, having a cylindrical outer surface which forms two bearing surfaces (2) spaced from one another which guide a hand piece part (IV, V) which can be attached axially to the motor cartridge (I), can be secured axially by means of a snap-locking device (5), and which either includes the handle sleeve (18) and the head housing (17) or can have a hand piece part (VI) comprising a handle sleeve with head housing coupled axially to it,
- at the end of the motor cartridge (I) remote from the hand piece part (IV, V) a sleeve-shaped coupling (III) is provided whose inner diameter is smaller than the outer diameter of the motor cartridge (I) and which when coupled embraces a connecting stud (7) of the supply hose (9) which receives the medium air and/or water from openings (11, 12) emerging from the cylindrical outer surface of the stud (7) and electrical energy from slip rings (13) arranged on the cylindrical outer surface of the stud and conducts them to connection members (32, 38, 39) in the coupling (III) that are arranged adjacent to one another and preferably project over one side opposite the cylindrical surface (1) of the motor cartridge.
- the connection members (32) for electrical energy end in a recess (31) in the coupling (III), said recess (31) having a lamp fitting arranged therein which forms one part (34) of an electric plug and socket connection (34, 50), whose other part is a matching plug (50) in the hand piece part (V, IV).

2. A hand piece arrangement according to claim 1, characterised in that the coupling (III) is connected non-rotatably to the drive cartridge (I), and the connection stud (7) of the supply hose (9) is connected to the coupling (III) by means of a rotatory coupling ensuring rotation of the motor cartridge (I) relative to the supply hose (9).

3. A hand piece arrangement according to claim 1, characterised in that the motor cartridge (I) is provided at its end facing the supply hose (9) with connection means (8) for a non-rotating connection to the supply hose (9) and that the coupling (III) is mounted non-rotatably to the connection stud (7) of the supply hose (9).

4. A hand piece arrangement according to claim 3, characterised in that the motor cartridge (I) includes a tubular projection (6) adapted in diameter to that of the connection stud (7) on which the coupling (III) is attached rotatably and overlapping the connection stud (7) of the supply hose (9).

5. A hand piece arrangement according to any one of claims 1 to 4, characterised in that the coupling (III) includes or forms a holder (40) accommodating the connection members (32, 38, 39), which comprises positioning and engagement surfaces (42) preferably running parallel to one another and facing the hand piece part (IV, V) to be attached, and which fit against suitably shaped counter surfaces (58) in the hand piece part (IV, V) to be attached.

6. A hand piece arrangement according to claim 1, characterised in that a hand piece part (V, IV) is attachable to the motor cartridge (I) which has a passage (47) running substantially parallel to its axis for the alternative insertion of a light conductor (48) or an electric lead (49) provided with plug contacts (50, 51) at its ends, the passage (47) terminating, at the end facing the supply hose (9), in a recess (47b) in which alternatively one end (48b) of the light conductor (48) or an electrical plug (50) can be contained, and terminating at the opposite end in a recess (47a), in which alternatively the other end (48a) of the light conductor (48), a lamp (52), one part (51) of an electrical plug and socket connection (51, 56) or one part (53) of a slip ring contact arrangement (53, 57) can be contained.

7. A hand piece arrangement according to claim 6, characterised in that the conducting elements (48, 49 to 51, 52, 53) are contained in a rod-shaped insert (55) which is exchangeably mounted in the hand piece part (V, IV).

8. A hand piece arrangement according to claim 7, characterised in that the insert (55) is inserted in a longitudinal groove in the hand piece part (V) covered by an outer sleeve (43).

9. A hand piece arrangement according to claim 6, characterised in that a circular recess is provided in the hand piece part (IV, V) and/or in the coupling (III) in which an annular insert, accommodating one of the alternative conducting elements (32, 33, 50 to 53) to be provided, is exchangeably mounted.

10. A hand piece arrangement according to claim 6, characterised in that the hand piece part (V) attachable to the motor cartridge (I) includes a case (21) overlapping the motor cartridge and having a guide stud (22) arranged on the side facing away from the supply hose (9) and surrounding the drive shaft (3) of the motor, on which in a known manner a hand and elbow piece (VI) can be attached axially and fixed rotatably when attached, wherein after attachment the drive shaft section or sections (24) of the hand and/or elbow piece engage with the motor shaft (3), in that the case (21) has surfaces (58) at its end face facing the supply hose (9) which engage with the positioning surfaces (42) on the coupling (III) when attaching the case (21), and that at least one light or current conducting element (48 to 53) is provided which is guided in the case (21) substantially parallel to its axis and terminates at the front end of the case (21).

11. A hand piece arrangement according to any one of claims 1 to 9, characterised in that the hand piece part (I) attachable to the motor cartridge (I) comprises a case (19) overlapping the motor cartridge having a handle sleeve (18) attached thereto and a head part including the head housing (17) associated therewith, whose drive shaft sections (20) engage with the motor shaft (3) when attached, in that the case (19) has surfaces (58) on its face facing the supply hose (9) which engage with the positioning surfaces (42) on the coupling (III) when attaching the case (19) and that at least one light or current conducting element (60) is arranged in the hand piece part (IV).

12. A hand piece arrangement according to any one of claims 1 to 11, characterised in that arranged on the front end of the hand piece part (V) attachable to the motor cartridge (I) are two plug contacts (Figure 15) which match counter-contacts on the further hand piece part (VI), to be coupled on axially, which includes a light source.

13. A hand piece arrangement according to any one of claims 1 to 11, characterised in that arranged on the front end of the hand piece part (V) attachable to the motor cartridge (I) are two sliding contacts (Figure 18) which match corresponding counter-contacts in the further hand piece part (VI), to be coupled on axially, which includes a light source.

14. A hand piece arrangement according to claim 13, characterised in that the sliding contacts comprise two resilient contact tongues which, when the hand piece parts (V, VI) are coupled together, bear against concentrically associated slip rings (57) of the hand piece part (VI) that is to be coupled on, and which are arranged in an insert which can be inserted into a plug socket (51) arranged at the front end or alternatively in a recess (47a) provided therefor.

## Revendications

1. Dispositif à pièce à main de dentisterie, comportant un moteur d'entraînement, pouvant être raccordé à un tuyau d'alimentation (9), dans lequel passent des conduites pour l'air et/ou l'eau ainsi que des conducteurs électriques (10), et une partie (IV, VI), qui comporte un boîtier de tête (17) et un manchon de préhension (18) et peut être accouplée au moteur d'entraînement et dont la section d'arbre mené (20/24) est reliée, à l'état accouplé, à l'arbre (3) du moteur d'entraînement, et comportant en outre des moyens d'accouplement rotatifs, qui garantissent une rotation de la partie de la pièce à main par rapport au tuyau d'alimentation (9), une source de lumière alimentée en énergie électrique au moyen de conducteurs ainsi que, éventuellement, un ou plusieurs éléments formant guides de lumière raccordés à la source de lumière, caractérisé par le fait

- que le moteur d'entraînement est constitué par un module (I) du moteur, qui loge essentiellement uniquement un stator, un rotor, des paliers et éventuellement des balais et des porte-balais, possède une surface enveloppe cylindrique et forme deux surfaces de support (2) distantes l'une de l'autre, qui guident une partie (IV, V) de la pièce à main, qui peut être emmanchée axialement sur le module (I) du moteur, peut être verrouillée axialement au moyen d'un dispositif d'encliquetage rapide (5) et contient le manchon de préhension (18) et le boîtier de tête (17) ou bien à laquelle il est possible d'accoupler axialement une partie (VI) de la pièce à main contenant un manchon de préhension muni d'un boîtier de tête,

- que sur l'extrémité, tournée à l'opposé de la partie (IV, V) de la pièce à main, du module (I) du moteur il est prévu un corps d'accouplement en forme de manchon (III), dont le diamètre intérieur est inférieur au diamètre extérieur du module (I) du moteur et qui, à l'état accouplé, enserre un embout de raccordement (7) du tuyau d'alimentation (9), qui prend en charge les milieux, que sont l'air et/ou l'eau, délivrés par des ouvertures (11, 12) débouchant dans la surface cylindrique de l'embout (7), et une énergie électrique délivrée par des bagues coulissantes (13) disposées sur la surface de la broche et les envoie à des organes de raccordement (32, 38, 39), qui sont situés dans le corps d'accouplement (III), sont voisins les uns des autres et font saillie de préférence d'un côté par rapport à la surface enveloppe (1) du module du moteur, et

- que les organes de raccordement (32) pour l'énergie électrique se terminent dans un évidement (31) du corps d'accouplement (III), dans lequel se trouve disposée une douille de lampe qui forme une partie (34) d'un connecteur électrique (34, 50), dont l'autre partie est une fiche (50) adaptée à la première partie et située dans la partie (V, IV) de la pièce à main.

2. Dispositif à pièce à main suivant la revendication 1, caractérisé par le fait que le corps d'accouplement (III) est relié, en étant bloqué contre toute rotation, au module d'entraînement (I) et que l'embout de raccordement (7) du tuyau d'alimentation (9) est relié au corps d'accouplement (III) au moyen d'un accouplement rotatif garantissant une rotation du module (I) du moteur par rapport au tuyau d'alimentation (9).

3. Dispositif à pièce à main suivant la revendication 2, caractérisé par le fait que module (I) du moteur comporte, sur son extrémité tournée vers le tuyau d'alimentation (9), des moyens de raccordement (8) pour l'établissement d'une liaison, avec blocage en rotation, avec le tuyau d'alimentation (9) et que le corps d'accouplement (III) est maintenu avec blocage en rotation sur l'embout de raccordement (7) du tuyau d'alimentation (9).

4. Dispositif à pièce à main suivant la revendication 3, caractérisé par le fait que le module (I) du moteur possède un appendice tubulaire saillant (6) adapté à l'embout de raccordement (7) et sur lequel le corps d'accouplement (III) est emmanché de façon à pouvoir tourner, en enserrant l'embout de raccordement (7) du tuyau d'alimentation (9).

5. Dispositif à pièce à main suivant l'une des revendication 1 à 4, caractérisé par le fait que le corps d'accouplement contient ou forme un élément de retenue (40), qui loge les organes de raccordement (32, 38, 39) et contient des surfaces de positionnement et d'entraînement (42), qui sont de préférence parallèles entre elles, sont tournées vers la partie (IV, V) de la pièce à main, qui doit être emmanchée, et s'adaptent à des surfaces antagonistes (58) de forme adaptée, présentes dans la partie (IV, V) de la pièce à main, devant être emmanchée.

6. Dispositif à pièce à main suivant la revendication 1, caractérisé par le fait que sur le module (I) du moteur on peut emmancher une partie (V, IV) de la pièce à main, qui comporte un canal de guidage (47) sensiblement parallèle à l'axe et prévu pour l'utilisation alternative d'un guide de lumière (48) ou d'un conducteur électrique (49) comportant, à ses extrémités, des contacts enfichables (50, 51), le canal de guidage (47) se terminant, au niveau de l'extrémité tournée vers le tuyau d'alimentation (9), dans un évidement (47b), dans lequel on peut fixer alternativement une extrémité (46b) du guide de lumière (48) ou une prise une électrique (50), et se termine, au niveau de l'extrémité opposée, dans un évidement (47a), dans lequel on peut fixer alternativement l'autre extrémité (48a) du guide de lumière (48), d'une lampe (52), une partie (51) d'un connecteur électrique (51, 56) ou une partie (53) d'un dispositif de contact à bagues coulissantes (53, 57).

7. Dispositif à pièce à main suivant la revendication 6, caractérisé par le fait que les éléments de transmission (48, 49 à 51, 52, 53) sont montés dans un insert en forme de barreau (55), qui est retenu, de manière à être remplaçable, dans la partie (V, IV) de la pièce à main.

8. Dispositif à pièce à main suivant la revendication 7, caractérisé par le fait que l'insert (55) est monté dans une rainure longitudinale, recouverte d'une douille extérieure (43), de la partie (V) de la pièce à main.

9. Dispositif à pièce à main suivant la revendication 6, caractérisé par le fait que dans la partie (IV, V) de la pièce à main et/ou dans le corps d'accouplement (III), il est prévu un évidement de forme annulaire, dans lequel un insert annulaire, qui loge les éléments de transmission (32, 33, 50 à 53) devant être prévus en alternance, est monté de manière à pouvoir être remplacé.

10. Dispositif à pièce à main suivant la revendication 6, caractérisé par le fait que la partie (V) de la pièce à main, qui peut être emmanchée sur le module (I) du moteur, contient un manchon (21) s'engageant sur le module du moteur et comportant une broche de guidage (22), qui est disposée sur le côté tourné à l'opposé du tuyau d'alimentation (9) et entoure l'arbre d'entraînement (3) du moteur et sur laquelle, de façon connue, une pièce à main coudée (6) peut être emmanchée axialement et être maintenue avec possibilité de rotation à l'état emmanché, auquel cas, dans cet état emmanché, la ou les sections (24) de l'arbre entraîné de la pièce à main coudée sont en prise avec l'arbre (3) du moteur, que le manchon (21) comporte, sur sa face frontale tournée vers le tuyau d'alimentation (9), des surfaces (58), qui viennent en contact avec des surfaces de positionnement (42) situées sur le corps d'accouplement (III), lors de l'emmanchement du manchon (21), et qu'il est prévu au moins un élément (48 ou 53) qui véhicule la lumière ou le courant, s'étend dans le manchon (21) en étant sensiblement parallèle à l'axe et se termine au niveau de la face frontale du manchon (21).

11. Dispositif à pièce à main suivant l'une des revendications 1 à 9, caractérisé par le fait que la partie (4) de la pièce à main, qui peut être emmanchée sur le module (I) du moteur, contient un manchon (19) s'engageant par-dessus le module du moteur et comportant un manchon de préhension (18) se raccordant au précédent et une partie de tête montée sur le manchon de préhension et contenant le boîtier de tête (17), et dont les sections (20) de l'arbre mené sont en prise, à l'état emmanché, avec l'arbre (3) du moteur, que le manchon (19) comporte, sur sa surface frontale tournée vers le tuyau d'alimentation (9), des surfaces (58), qui viennent en contact avec des surfaces de positionnement (42) situées sur le corps d'accouplement (III), lors de l'emmanchement du manchon (19), et qu'au moins un élément (60) guidant une lumière ou un courant est disposé dans la partie (IV) de la pièce à main.

12. Dispositif à pièce à main suivant l'une des revendications 1 à 11, caractérisé par le fait que la face frontale de la partie (V) de la pièce à main, qui peut être emmanchée sur le module (1) du moteur, porte deux contacts à enfichage (figure 15), auxquels s'adaptent les contacts antagonistes prévus sur l'autre partie (6) de la pièce à main, qui doit être accouplée axialement et contient une source de lumière.

13. Dispositif à pièce à main suivant l'une des revendications 1 à 11, caractérisé par le fait que la face frontale de la partie (V) de la pièce à main, qui peut être emmanchée sur le module (1) du moteur, porte deux contacts glissants (figure 18), auxquels s'adaptent les contacts antagonistes prévus sur l'autre partie (6) de la pièce à main, qui doit être accouplée axialement et contient une source de lumière.

14. Dispositif à pièce à main suivant la revendication 13, caractérisé par le fait qu'il est prévu, comme contacts glissants, deux languettes de contact élastiques qui, lorsque les parties (V, VI) de la pièce à main sont à l'état accouplé, s'appliquent sur des bagues coulissantes (57), concentriques l'une à l'autre, de la partie (VI) de la pièce à main, devant être accouplée, et sont disposées dans un insert, qui peut être inséré dans une douille enfichable (51) disposée sur l'extrémité frontale ou, à sa place, dans un évidement (47a) prévu à cet effet.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16

FIG 17

FIG 18

EP 0 185 290 B1